(19) Europäisches Patentamt
European Patent Office
Office européen des brevets

(11) Veröffentlichungsnummer: **0 013 429**
**B1**

# (12) EUROPÄISCHE PATENTSCHRIFT

(45) Veröffentlichungstag der Patentschrift: **20.07.83**

(51) Int. Cl.³: **C 07 C 103/37,** C 07 C 103/38, A 01 N 37/18

(21) Anmeldenummer: **79105383.8**

(22) Anmeldetag: **27.12.79**

## (54) Alpha-substituierte N-(Trimethyl-cycloalkenyl)-N-alkylacetamide und deren Verwendung in phytotoxischen Zubereitungen.

(30) Priorität: **29.12.78 DE 2856651**
**04.10.79 DE 2940231**

(43) Veröffentlichungstag der Anmeldung: **23.07.80 Patentblatt 80/15**

(45) Bekanntmachung des Hinweises auf die Patenterteilung: **20.07.83 Patentblatt 83/29**

(84) Benannte Vertragsstaaten: **BE CH DE FR GB IT LU NL SE**

(56) Entgegenhaltungen:
**DE-A-2 045 380**
**US-A-3 574 746**

(73) Patentinhaber: **CHEMISCHE WERKE HÜLS AG, Postfach 1320, D-4370 Marl 1 (DE)**

(72) Erfinder: **Baltruschat, Helmut, Dr., Schwalbenweg 2, D-4408 Dülmen (DE)**
Erfinder: **Bellut, Hans, Dr., Bergstrasse 50, D-4408 Dülmen (DE)**
Erfinder: **Schnurbusch, Horst, Dr., Overwegstrasse 36, D-4690 Herne 1 (DE)**

(74) Vertreter: **Steil, Hanna, Dipl.-Chem. et al, RSP PATENTE - PB 15 Postfach 1320, D-4370 Marl 1 (DE)**

EP 0 013 429 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

α-substituierte N-(Trimethyl-cycloalkenyl)-N-alkylacetamide und deren Verwendung in phytotoxischen Zubereitungen

N-Alkenyl- und N-Cycloalkenyl-acetamide sind bekannt. Auch ist deren Eignung sowohl als Vorauflauf- als auch als Nachauflaufherbizid beschrieben worden. Die Suche nach speziellen Substanzen mit verbesserter biocider Wirkung wurde fortgesetzt.

Als Substanzgruppe mit derartigen Eigenschaften wurden α-substituierte N-(Trimethylcycloalkenyl)-N-alkyl-acetamide gefunden, die folgender Formel entsprechen:

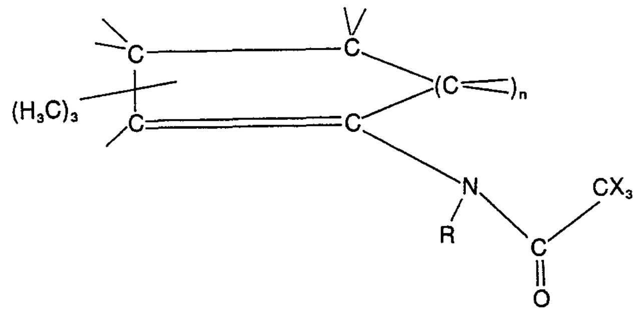

I.

mit n = 1 oder 2 und der Massgabe, dass die 3 Methylgruppen

bei den 1-Cyclopentenderivaten (n = 1) nur in 3,3,5- oder 3,5,5- oder 2,4,4-Stellung und

bei den 1-Cyclohexenderivaten (n = 2) nur in 3,3,5- oder 3,5,5-Stellung stehen dürfen und die übrigen Valenzen der C-Atome im Ring mit Wasserstoff besetzt sind, und dass

R ein geradkettiger oder verzweigter Alkyl- oder Alkoxyalkylrest mit 1 bis 6 C-Atomen oder ein gegebenenfalls mit $C_1$ bis $C_4$-Alkylgruppen substituierter Alkylrest ist und

X Substituenten aus der Gruppe Wasserstoff, Methyl, Chlor und Brom in beliebiger Kombination bedeuten, jedoch mit der Massgabe, dass höchstens zwei dieser Substituenten H sein dürfen.

Die neuen α-substituierten N-(Trimethyl-cycloalkenyl)-N-alkyl-acetamide können in bekannter Weise synthetisiert werden, indem man zunächst ein cyclisches Keton der Formel II mit einem Amin der Formel III unter Wasseraustritt zum entsprechenden Azomethin der Formel IV umsetzt.

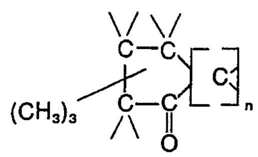

$+ H_2N{-}R$

(II) (III)

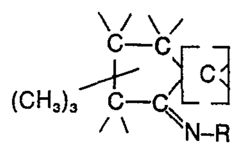

$+ H_2O$

(IV)

Dieses Azomethin wird dann in einer weiteren Stufe mit α-substituierten Acetylhalogeniden der Formel V in Gegenwart eines säurebindenden Mittels zur Reaktion gebracht.

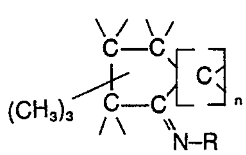

+

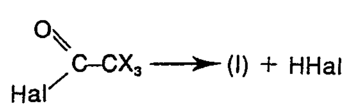


(IV) (V)

In der Formel V steht Hal stellvertretend für die Halogene Chlor und Brom, vorzugsweise jedoch für Chlor.

Als Ausgangsprodukte der Formel II zur Herstellung der Azomethine der Formel IV können Cyclopentanone und -hexanone eingesetzt werden, die wenigstens an einem der beiden α-C-Atome ein Wasserstoffatom tragen. Wichtig für die neuen Acetamide ist weiter, dass beim Ringketon 2 der Methylgruppen des Ringes am gleichen

Ringkohlenwasserstoff angeordnet sind, also geminal sind. Bevorzugt sind die technisch leicht zugängigen Ketone, wie das 3,3,5-Trimethylcyclohexanon und das 2,2,4- und 2,4,4-Trimethylcyclopentanon u.ä. Da diese speziellen cyclischen Ketone bei der Herstellung meist als Isomerengemische anfallen, werden diese auch vorzugsweise in Form der technischen Gemische eingesetzt.

Zur Umsetzung mit den vorherbeschriebenen cyclischen Ketonen eignen sich die primären Amine mit geradkettigen oder verzweigten Alkyl- und Alkoxyalkylresten mit 1–6 C-Atomen, wie Methylamin, Ethylamin, n- und i-Propylamin, n-, i- und tert. Butylamin, sowie Pentyl- und Hexylamine und Allylamine. Auch geeignet sind Methoxy- und Äthoxyethylamin. Bevorzugt werden Reste mit 1–4 C-Atomen. Die Umsetzung der Ketone der Formel II mit den primären Aminen zu den Azomethinen der Formel IV kann nach bekannten Methoden durchgeführt werden, so durch Entfernung des entstehenden Wassers durch azeotrope Destillation. Geeignet sind inerte Lösungsmittel, d.h. solche, die weder mit den Ausgangsverbindungen noch mit dem Endprodukt reagieren, z.B. Aromaten, wie Benzol, Toluol, Xylole, Chlorbenzol, Tetrahydronapthalin u.ä., Dialkyläther und chlorierte Aliphate. Ebenfalls möglich ist der Einsatz der Ausgangsketone der Reaktion im Überschuss als Schleppmittel. Die Reaktionstemperatur stellt sich in Abhängigkeit von dem zur Wasserabspaltung verwendeten Schleppmittel ein.

Die Wasserabspaltung kann durch Zusatz saurer oder sauerwirkender Katalysatoren, wie Salz- und Blausäure, Ammoniumsulfat, Zinkchlorid, oder basische Verbindungen, wie KOH, NaOH und Alkalicarbonate, katalytisch beschleunigt werden. Häufig – bei sterisch gehindertem Reaktionspartner – ist es vorteilhaft, die Entfernung des Reaktionswassers kontinuierlich durch Molekularsiebe durchzuführen.

Die Azomethine der Formel IV werden dann, meist ohne besondere Reinigungsoperationen, direkt mit den substituierten Acetylhalogeniden der Formel V in Gegenwart säurebindender Mittel, wie tertiäre Amine, Pyridinbasen oder Alkalicarbonate, weiter umgesetzt. Eine andere Variante besteht im Austreiben der entstehenden Halogenwasserstoffsäure durch Verkochen. Als Acetylhalogenid wird Chloracetylchlorid bevorzugt.

Die Addition des Acetylrestes an die Azomethindoppelbindung erfolgt zweckmässigerweise im Temperaturbereich von 0–160 °C, vorzugsweise bei 0–20 °C.

Die Isolierung der erfindungsgemässen N-(Trimethyl-cycloalkenyl)-N-alkyl-acetamide erfolgt, ggf. nach Entfernung der ausgeschiedenen Halogenide durch Filtration, durch destillative Aufarbeitung der Ansätze zur Entfernung der Lösungsmittel der vorherigen Umsetzungsstufe. Die Reinigung der erhaltenen Acetamide kann dann anschliessend durch Umkristallisation mit geeigneten anderen Lösungsmitteln, wie Formamid oder Alkoholen, erfolgen.

Bei Verwendung von unsymmetrischen Ketonen kann die entstehende Doppelbindung im Cycloalkylring 2 verschiedene Positionen einnehmen, sofern beide β-ständigen Ring-C-Atome mindestens ein Wasserstoffatom haben. Es liegen dann im Reaktionsprodukt Mischungen isomerer Verbindungen der Formel I vor, die sich nur durch die Lage der Doppelbindung unterscheiden. Die biologische Wirksamkeit wird jedoch dadurch nicht beeinflusst.

Die Verbindungen der Formel I stellen je nach Anordnung der Methylgruppen am Ring und der Substitution der Acetamidgruppierung flüssige bis kristalline Produkte dar.

Die Herstellung der neuen N-(Trimethyl-cycloalkenyl)-N-alkyl-acetamide wird durch die nachstehenden Beispiele beschrieben.

Beispiel 1

In 840 Gewichtsteilen (6 Mol) 3,3,5-Trimethyl-cyclohexanon, gelöst in 6 l Benzol unter Zusatz von 2 Gewichtsteilen Ammoniumsulfat, wurden bei 0 °C 186 Teile (6 Mol) Methylamin gasförmig eingeleitet. Nach 18stündigem Stehen hatte sich eine zweite wässrige Phase gebildet, die abgetrennt wurde. Durch Kochen am Wasserabscheider wurde das restliche Wasser entfernt. Die erhaltene benzolische Lösung des Azomethins wurde dann langsam bei Raumtemperatur unter Rühren mit 678 Gewichtsteilen (6 Mol) Chloracetylchlorid versetzt und nach einer Stunde 667 Gewichtsteile (6,6 Mol) Triäthylamin zugegeben. Nach einer weiteren Stunde Rühren wurde vom abgeschiedenen HCl-Salz abfiltriert, das Filtrat mit Wasser chlorfrei gewaschen und im Vakuum destilliert.

Es wurde nach Vertreiben des Lösungsmittels eine gelbe ölige Flüssigkeit (Kp = 130–45 °C bei 1,5 Torr), die im Laufe der Zeit nachdunkelt ($n_D^{20}$ = 1,4942) erhalten. Beim Stehenlassen scheiden sich langsam Kristalle mit einem Schmp. = 34 °C ab. Die Ausbeute über alle Stufen betrug 766 Gewichtsteile eines Gemisches aus

N-(3,3,5-Trimethylcyclohexen-1-yl)-N-methyl-α-chloracetamid

und

N-(3,5,5-Trimethylcyclohexen-1-yl)-N-methyl-α-chloracetamid

mit dem Molgewicht 213 (229) und organischgebundenem Chlor 15,1% (15,3%). (In Klammern sind die jeweils berechneten Daten angegeben).

Beispiel 2

In gleicher Weise wie im Beispiel 1 wurde aus einem Gemisch bestehend aus 2,2,4-Trimethylcyclopentanon und 2,4,4-Trimethylcyclopentanon (etwa 1 : 1) (25,2 Gewichtsteile) in 150 ml Benzol, 1 Gewichtsteil Ammoniumsulfat und 6,2 Gewichtsteile Methylamin und weiterer Umsetzung mit 22,6 Gewichtsteilen Chloracetylchlorid sowie 24,6 Gewichtsteile Triäthylamin das Isomerengemisch bestehend aus

N-(3,3,5-Trimethylcyclopenten-1-yl)-N-methyl-α-chloracetamid,

N-(3,5,5-Trimethylcyclopenten-1-yl)-N-methyl-α-chloracetamid

und

N-(2,4,4-Trimethylcyclopenten-1-yl-)-N-methyl-α-chloracetamid erhalten. Die Ausbeute an dem teilkristallinen dunkelbraunen Produkt betrug 33 Gewichtsteile. Als Molgewicht wurde 198 (215) ermittelt. Der Gehalt an organischgebundenem Chlor betrug 17,5ol (16,5%). Der Stickstoffgehalt betrug 6,3% (6,5%).

Beispiele 3–60

Entsprechend Beispiel 1 wurden weiterhin N-(Trimethyl-cycloalkenyl)-N-alkyl-acetamide hergestellt. Die Ausgangssubstanzen für die Synthese können der nachstehenden Übersicht entnommen werden.

| Beispiel Nr. | eingesetztes Keton (1 Mol) | eingesetztes Amin (1 Mol) | substituiertes Acetylchlorid (1 Mol) |
|---|---|---|---|
| 3 | 3,3,5-Trimethyl-cyclohexanon | $CH_3NH_2$ | $Cl_2CH–COCl$ |
| 4 | „ | „ | $Cl_3C–COCl$ |
| 5 | „ | „ | $(CH_3)_3C–COCl$ |
| 6 | „ | „ | $CH_3CCl_2–COCl$ |
| 7 | „ | „ | $CH_3–COCl$ |
| 8 | „ | $C_2H_5NH_2$ | $ClCH_2–COCl$ |
| 9 | „ | „ | $Cl_2CH–COCl$ |
| 10 | „ | „ | $Cl_3C–COCl$ |
| 11 | „ | „ | $(CH_3)_3C–COCl$ |
| 12 | „ | „ | $CH_3CCl_2–COCl$ |
| 13 | „ | „ | $CH_3–COCl$ |
| 14 | „ | $(CH_3)_2CHNH_2$ | $ClCH_2–COCl$ |
| 15 | „ | „ | $Cl_2CH–COCl$ |
| 16 | „ | „ | $Cl_3C–COCl$ |
| 17 | „ | „ | $(CH_3)_3C–COCl$ |
| 18 | „ | „ | $CH_3CCl_2–COCl$ |
| 19 | „ | „ | $CH_3–COCl$ |
| 20 | „ | $i\text{-}C_4H_9NH_2$ | $ClCH_2–COCl$ |
| 21 | „ | „ | $Cl_2CH–COCl$ |
| 22 | „ | „ | $Cl_3C–COCl$ |
| 23 | „ | „ | $(CH_3)_3C–COCl$ |
| 24 | „ | „ | $CH_3CCl_2–COCl$ |
| 25 | „ | „ | $CH_3–COCl$ |
| 26 | 2,2,4- und 2,4,4-Trimethylcyclo-pentanon (1:1) | $CH_3NH_2$ | $Cl_2CH–COCl$ |
| 27 | „ | „ | $Cl_3C–COCl$ |
| 28 | „ | „ | $(CH_3)_3C–COCl$ |
| 29 | „ | „ | $CH_3CCl_2–COCl$ |
| 30 | „ | „ | $CH_3–COCl$ |
| 31 | „ | $C_2H_5NH_2$ | $ClCH_2–COCl$ |
| 32 | „ | „ | $Cl_2CH–COCl$ |
| 33 | „ | „ | $Cl_3C–COCl$ |
| 34 | „ | „ | $(CH_3)_3–COCl$ |
| 35 | „ | „ | $CH_3CCl_2–COCl$ |
| 36 | „ | „ | $CH_3–COCl$ |
| 37 | „ | $(CH_3)_2CHNH_2$ | $ClCH_2–COCl$ |
| 38 | „ | „ | $Cl_2CH–COCl$ |
| 39 | „ | „ | $Cl_3C–COCl$ |
| 40 | „ | „ | $(CH_3)_3C–COCl$ |
| 41 | „ | „ | $CH_3CCl_2–COCl$ |
| 42 | „ | „ | $CH_3–COCl$ |
| 43 | „ | $i\text{-}C_4H_9NH_2$ | $ClCH_2–COCl$ |
| 44 | „ | „ | $Cl_2CH–COCl$ |
| 45 | „ | „ | $Cl_3C–COCl$ |
| 46 | „ | „ | $(CH_3)_3C–COCl$ |
| 47 | „ | „ | $CH_3CCl_2–COCl$ |
| 48 | „ | „ | $CH_3–COCl$ |

| Beispiel Nr. | eingesetztes Keton (1 Mol) | eingesetztes Amin (1 Mol) | substituiertes Acetyl-halogenid (1 Mol) |
|---|---|---|---|
| 49 | 3,3,5-Trimethyl-cyclohexanon | n-$C_4H_9NH_2$ | $ClCH_2$–COCl |
| 50 | 2,2,4- und 2,4,4-Trimethylcyclo-pentanon (1:1) | „ | „ |
| 51 | 3,3,5-Trimethyl-cyclohexanon | $CH_3OC_2H_4NH_2$ | „ |
| 52 | 3,3,5-Trimethyl-cyclohexanon | $C_2H_5OC_2H_4NH_2$ | „ |
| 53 | „ | $CH_3OC_3H_6NH_2$ | „ |
| 54 | „ | $C_2H_5OC_3H_6NH_2$ | „ |
| 55 | „ | $C_4H_9OC_3H_6NH_2$ | „ |
| 56 | 3,3,5-Trimethyl-cyclohexanon | $CH_3NH_2$ | Br $CH_2$–COCl |
| 57 | „ | $C_2H_5NH_2$ | „ |
| 58 | „ | $(CH_3)_2CHCH_2NH_2$ | „ |
| 59 | 2,2,4- und 2,4,4-Trimethylcyclo-pentanon (1:1) | $CH_3NH_2$ | „ |
| 60 | 3,3,5-Trimethyl-cyclohexanon | $CH_3OC_2H_4NH_2$ | „ |

Beispiel 61

Zu 28 Gewichtsteilen (0,2 Mol) 3,3,5-Trimethyl-cyclohexanon, gelöst in 0,25 l Benzol unter Zusatz von 0,1 Gewichtsteilen Ammoniumsulfat, wurden bei Raumtemperatur 11,4 Gewichtsteile (0,2 Mol) Allylamin gegeben. Durch Kochen am Wasserabscheider wurde das Wasser entfernt. Die erhaltene benzolische Lösung des Azomethins wurde dann langsam bei Raumtemperatur unter Rühren mit 22,6 Gewichtsteilen (0,2 Mol) Chloracetylchlorid, gelöst in 0,05 l Benzol, versetzt und nach einer Stunde 22 Gewichtsteile (0,2 Mol) Triäthylamin, gelöst in 0,1 l Benzol, zugegeben. Nach einer weiteren Stunde Rühren wurde vom abgeschiedenen HCl-Salz abfiltriert, das Filtrat mit Wasser chlorfrei gewaschen und im Vakuum destilliert.

Es wurde nach Vertreiben des Lösungsmittels eine orangefarbene, ölige Flüssigkeit (Kp = 103 – 8 °C bei 1,0 Torr), die im Laufe der Zeit nachdunkelt, ($n_D^{20}$ = 1,4974) erhalten. Die Ausbeute über alle Stufen betrug 36 Gewichtsteile eines Gemisches aus

N-(3,3,5-Trimethylcyclohexen-1-yl)-N-allyl-α-chloracetamid und

N-(3,3,5-Trimethylcyclohexen-1-yl)-N-allyl-α-chloracetamid

mit dem Molgewicht 230 (255) und organisch gebundenem Chlor 14,8% (13,9%). In Klammern sind jeweils die berechneten Werte angegeben.

Beispiel 62

In gleicher Weise wie im Beispiel 61 wurde aus einem Gemisch bestehend aus 2,2,4-Trimethylcylcopentanon und 2,4,4-Trimethylcyclopentanon (etwa 1 : 1) (25,2 Gewichtsteile; 0,2 Mol) in 0,2 l Benzol, 0,1 Gewichtsteilen Ammoniumsulfat und 11,4 Gewichtsteilen (0,2 Mol) Allylamin und weiterer Umsetzung mit 22,6 Gewichtsteilen (0,2 Mol) Chloracetylchlorid in 0,05 l Benzol sowie 22 Gewichtsteilen (0,2 Mol) Triäthylamin in 0,1 l Benzol das Isomergengemisch bestehend aus

N-(3,3,5-Trimethylcyclopenten-1-yl)-N-allyl-α-chloracetamid,

N-(3,5,5-Trimethylcyclopenten-1-yl)-N-allyl-α-chloracetamid und

N-(2,4,4-Trimethylcyclopenten-1-yl)-N-allyl-α-chloracetamid

erhalten. Die Ausbeute an braunem öligem Destillat (KP = 88–93 °C; bei 1,0 Torr) betrug 29 Gewichtsteile mit dem Berechnungsindex ($n_D^{20}$ = 1,4978). Als Molgewicht wurde 210 (241) ermittelt. Der Gehalt an organischgebundenem Chlor betrug 15,9% (14,7%). Der Stickstoffgehalt betrug 6,1% (5,8%).

Beispiele 61, 62, 63

Entsprechend Beispiel 61 wurde ein weiteres N-(Trimethylcycloalkenyl)-N-alkyl-acetamid hergestellt. Die Ausgangssubstanzen für die Synthese der Wirkstoffe 61 bis 63 können der nachstehenden Übersicht entnommen werden.

| Beispiel Nr. | eingesetztes Keton (1 Mol) | eingesetztes Amin (1 Mol) | substituiertes Acetylchlorid (1 Mol) |
|---|---|---|---|
| 61 | 3,3,5-Trimethyl-cyclohexanon | $CH_2=CHCH_2NH_2$ | $ClCH_2$–COCl |
| 62 | 2,2,4- und 2,4,4-Trimethylcyclo-pentanon (1:1) | $CH_2=CHCH_2NH_2$ | $ClCH_2$–COCl |
| 63 | 3,3,5-Trimethyl-cyclohexanon | $CH_2=CHCH_2NH_2$ | $BrCH_2$–COCl |

Die physikalischen Werte der gemäss vorstehender Tabelle synthetisierten Acetamide zeigt die nachstehende:

| Beispiel Nr. | Siedepunkte $Kp_1$; °C | Brechungs-index $n_D^{20}$ | % N th. | N gef. | % Cl. th. | Cl. gef. | Mol.-Gew. th. | Mol.-Gew. gef. | Amidbande IR ($cm^1$) |
|---|---|---|---|---|---|---|---|---|---|
| 3 | 97–130 | – | 5,3 | 5,1 | 26,9 | 27,7 | 264,0 | 255 | 1650 |
| 4 | 80–120 | 1.5160 | – | – | 35,3 | 37,0 | 298,5 | 210 | – |
| 5 | – | 1.4679 | 5,9 | 4,6 | – | – | 237,0 | 205 | – |
| 6 | 105–120 | 1.4924 | 5,0 | 4,3 | 25,6 | 27,5 | 278,0 | 255 | 1625–45 |
| 7 | 87– 92 | 1.4750 | 7,2 | 6,7 | – | – | 195,0 | 195 | 1630–50 |
| 8 | 87–110 | 1.4880 | 5,8 | 5,4 | 14,6 | 15,0 | 243,5 | 225 | 1650 |
| 9 | 120–140 | 1.4993 | 5,0 | 4,6 | 25,5 | 26,4 | 278,0 | 255 | 1650 |
| 10 | – | – | 4,5 | 4,7 | 34,1 | 34,6 | 312,5 | 280 | 1670 |
| 11 | 97–108 | 1.4750 | 5,6 | 5,1 | – | – | 251,0 | 240 | 1620 |
| 12 | 120–135 | 1.4888 | 4,8 | 4,1 | 24,3 | 25,3 | 292,0 | 260 | 1630 |
| 13 | 96–110 | 1.4746 | 6,7 | 5,9 | – | – | 209,0 | 195 | 1630–50 |
| 14 | – | – | 5,4 | 4,4 | 13,8 | 16,0 | 257,5 | 270 | 1650 |
| 15 | – | – | 4,8 | 4,9 | 24,3 | 19,4 | 292,0 | 285 | 1660 |
| 16 | – | 1.5300 | 4,3 | 3,9 | 32,6 | 34,1 | 326,5 | 300 | 1670 |
| 17 | 64– 72 | 1.4539 | 5,3 | 6,5 | – | – | 265,0 | 270 | 1640 |
| 18 | – | – | 4,6 | 4,1 | 23,2 | 21,5 | 306;0 | 315 | 1640 |
| 19 | – | 1.4825 | 6,3 | 5,1 | – | – | 223,0 | 225 | 1630–50 |
| 20 | 108–120 | 1.4880 | 5,2 | 5,0 | 13,1 | 13,2 | 271,0 | 250 | 1650–70 |
| 21 | – | 1.5050 | 4,6 | 3,8 | 23,2 | 27,5 | 306,0 | 300 | 1660–1710 |
| 22 | – | 1.5040 | 4,1 | 3,8 | 31,3 | 30,9 | 340,5 | 335 | 1660–90 |
| 23 | 96–107 | 1.4723 | 5,0 | 4,7 | – | – | 279,0 | 270 | 1630 |
| 24 | 117–128 | 1.4895 | 4,4 | 3,8 | 22,2 | 26,2 | 320,0 | 300 | 1650 |
| 25 | 92–113 | 1.4680 | 5,9 | 6,3 | – | – | 237,0 | 215 | 1650 |
| 26 | 121–137 | 1.4994 | 5,6 | 5,5 | 28,4 | 29,5 | 250,0 | 235 | 1670 |
| 27 | 80–120 | 1.5215 | – | – | 37,1 | 35,0 | 284,5 | 247 | – |
| 28 | 84– 90 | 1.4718 | 6,3 | 6,1 | – | – | 223,0 | 210 | 1625 |
| 29 | 87– 99 | 1.4946 | 5,3 | 5,0 | 26,9 | 27,5 | 264,0 | 260 | 1660 |
| 30 | 74– 90 | 1.4765 | 7,7 | 6,4 | – | – | 181,0 | 175 | 1620–40 |
| 31 | 108–125 | 1.4893 | 6,1 | 5,7 | 15,5 | 17,0 | 229,0 | 205 | 1660 |
| 32 | 110–132 | 1.5000 | 5,3 | 4,4 | 26,9 | 32,0 | 264,0 | 240 | 1690 |
| 33 | 110–125 | 1.5431 | 4,7 | 4,8 | 35,7 | 37,2 | 279,0 | 230 | 1655 |
| 34 | 87– 98 | 1.4660 | 5,9 | 5,2 | – | – | 237,0 | 220 | 1620 |
| 35 | 80–103 | 1.4942 | 5,0 | 3,7 | 25,5 | 33,7 | 278,0 | 230 | 1640 |
| 36 | 87–120 | 1.4719 | 7,2 | 6,4 | – | – | 195,0 | 185 | 1650 |
| 37 | – | – | 5,7 | 4,6 | 14,6 | 17,9 | 243,0 | 230 | 1650 |
| 38 | 115–130 | 1.50 | 5,0 | 5,6 | 25,5 | 32,0 | 278,0 | 240 | 1665 |
| 39 | – | – | 4,5 | 4,4 | 34,1 | 34,4 | 312,5 | 305 | 1665 |
| 40 | 68– 79 | 1.4542 | 5,6 | 5,5 | – | – | 251,0 | 200 | 1620 |
| 41 | – | – | 4,8 | 3,5 | 24,3 | 28,4 | 292,0 | 275 | 1645 |
| 42 | 86–110 | 1.4772 | 6,7 | 5,9 | – | – | 209,0 | 215 | 1650 |
| 43 | 94–102 | 1.4835 | 5,4 | 6,6 | 13,8 | 16,1 | 257,5 | 190 | 1650–60 |
| 44 | 111–128 | 1.4900 | 4,9 | 5,4 | 24,7 | 25,7 | 292,0 | 235 | 1650–1700 |
| 45 | – | – | 4,3 | 4,3 | 32,6 | 31,5 | 326,5 | 300 | 1670 |
| 46 | 86– 96 | 1.4675 | 5,3 | 5,0 | – | – | 265,0 | 250 | 1630 |
| 47 | 94–106 | 1.5001 | 4,6 | 4,3 | 23,2 | 24,9 | 306,0 | 245 | 1650 |

| Beispiel Nr. | Siedepunkte $Kp_1$; °C | Brechungs-index, $n_D^{20}$ | % th. | N gef. | % th. | Cl. gef. | Mol.-Gew. th. | gef. | Amidbande IR ($cm^1$) |
|---|---|---|---|---|---|---|---|---|---|
| 48 | 87– 98 | 1.4710 | 6,3 | 6,1 | – | – | 223,0 | 215 | 1650 |
| 49 | 115– 25 | 1.4883 | 5,2 | 5,1 | 13,1 | 13,8 | 271,5 | 250 | 1655 |
| 50 | 113– 20 | 1.4870 | 5,4 | 5,6 | 13,8 | 13,9 | 257,5 | 190 | 1660 |
| 51 | 115– 21 | 1.4909 | 5,1 | 5,0 | 13,0 | 13,2 | 273,5 | 280 | 1665 |
| 52 | 110– 40 | 1.4843 | 4,9 | 5,2 | 12,3 | 13,6 | 287,5 | 270 | 1650 |
| 53 | 113– 18 | 1.4896 | 4,9 | 4,8 | 12,3 | 13,5 | 287,5 | 260 | 1655 |
| 54 | 120– 29 | 1.4851 | 4,6 | 4,7 | 11,8 | 12,3 | 301,5 | 260 | 1655 |
| 55 | – | 1.4840 | 4,2 | 4,3 | 10,8 | 11,1 | 329,5 | 290 | 1690 |
| 56 | 110– 15 | 1.4983 | 5,1 | 5,8 | 29,2 | 36 | 273,9 | 210 | 1650 |
| 57 | 110– 14 | 1.4990 | 4,9 | 5,5 | 27,8 | 32,3 | 287,9 | 230 | 1655 |
| 58 | 109– 14 | 1.4889 | 4,4 | 4,9 | 25,3 | 30,2 | 315,9 | 245 | 1675 |
| 59 | 98–101 | 1.4980 | 5,4 | 5,6 | 30,7 | 37,5 | 259,9 | 210 | 1660 |
| 60 | – | 1.4970 | 4,4 | 5,3 | 25,1 | 29,6 | 317,9 | 270 | 1650 |
| 61 | 103– 12 | 1.4974 | 5,5 | 5,4 | 13,9 | 14,8 | 255,5 | 230 | 1650 |
| 62 | 88– 93 | 1.4978 | 5,8 | 6,1 | 14,7 | 15,9 | 241,5 | 210 | 1650 |
| 63 | 105– 10 | 1.4992 | 4,7 | 5,5 | 26,6 | 32,2 | 299,9 | 235 | 1690 |

Namen der Verbindungen 3–63:

3. N-(Trimethylcyclohexen-1-yl)-N-methyl-α-dichloracetamid
4. N-(Trimethylcylcohexen-1-yl)-N-methyl-α-trichloracetamid
5. N-(Trimethylcyclohexen-1-yl)-N-methyl-pivalinsäureamid
6. N-(Trimethylcyclohexen-1-yl)-N-methyl-α-dichlorpropionamid
7. N-(Trimethylcyclohexen-1-yl)-N-methyl-acetamid
8. N-(Trimethylcyclohexen-1-yl)-N-äthyl-α-chloracetamid
9. N-(Trimethylcyclohexen-1-yl)-N-äthyl-α-dichloracetamid
10. N-(Trimethylcyclohexen-1-yl)-N-äthyl-α-trichloracetamid
11. N-(Trimethylcyclohexen-1-yl)-N-äthyl-pivalinsäureamid
12. N-(Trimethylcyclohexen-1-yl)-N-äthyl-α-dichlorpropionamid
13. N-(Trimethylcyclohexen-1-yl)-N-äthyl-acetamid
14. N-(Trimethylcyclohexen-1-yl)-N-isopropyl-α-chloracetamid
15. N-(Trimethylcyclohexen-1-yl)-N-isopropyl-α-dichloracetamid
16. N-(Trimethylcyclohexen-1-yl)-N-isopropyl-α-trichloracetamid
17. N-(Trimethylcyclohexen-1-yl)-N-isopropyl-pivalinsäureamid
18. N-(Trimethylcyclohexen-1-yl)-N-isopropyl-α-dichlorpropionamid
19. N-(Trimethylcyclohexen-1-yl)-N-isopropyl-acetamid
20. N-(Trimethylcyclohexen-1-yl)-N-isobutyl-α-chloracetamid
21. N-(Trimethylcyclohexen-1-yl)-N-isobutyl-α-dichloracetamid
22. N-(Trimethylcyclohexen-1-yl)-N-isobutyl-α-trichloracetamid
23. N-(Trimethylcyclohexen-1-yl)-N-isobutyl-pivalinsäureamid
24. N-(Trimethylcyclohexen-1-yl)-N-isobutyl-α-dichllorpropionamid
25. N-(Trimethylcyclohexen-1-yl)-N-isobutyl-acetamid
26. N-(Trimethylcyclopenten-1-yl)-N-methyl-α-dichloracetamid
27. N-(Trimethylcyclopenten-1-yl)-N-methyl-α-trichloracetamid
28. N-(Trimethylcyclopenten-1-yl)-N-methyl-pivalinsäureamid
29. N-(Trimethylcyclopenten-1-yl)-N-methyl-α-dichlorpropionamid
30. N-(Trimethylcyclopenten-1-yl)-N-methyl-acetamid
31. N-(Trimethylcyclopenten-1-yl)-N-äthyl-α-chloracetamid
32. N-(Trimethylcyclopenten-1-yl)-N-äthyl-α-dichloracetamid
33. N-(Trimethylcyclopenten-1-yl)-N-äthyl-α-trichloracetamid
34. N-(Trimethylcyclopenten-1-yl)-N-äthyl-pivalinsäureamid
35. N-(Trimethylcyclopenten-1-yl)-N-äthyl-α-dichlorpropionamid
36. N-(Trimethylcyclopenten-1-yl)-N-äthyl-acetamid
37. N-(Trimethylcyclopenten-1-yl)-N-isopropyl-α-chloracetamid
38. N-(Trimethylcyclopenten-1-yl)-N-isopropyl-α-dichloracetamid
39. N-(Trimethylcyclopenten-1-yl)-N-isopropyl-α-trichloracetamid
40. N-(Trimethylcyclopenten-1-yl)-N-isopropyl-pivalinsäureamid
41. N-(Trimethylcyclopenten-1-yl)-N-isopropyl-α-dichlorpropionamid
42. N-(Trimethylcyclopenten-1-yl)-N-isopropyl-acetamid
43. N-(Trimethylcyclopenten-1-yl)-N-isobutyl-α-chloracetamid
44. N-(Trimethylcyclopenten-1-yl)-N-isobutyl-α-dichloracetamid

45. N-(Trimethylcyclopenten-1-yl)-N-isobutyl-α-trichloracetamid
46. N-(Trimethylcyclopenten-1-yl)-N-isobutyl-pivalinsäureamid
47. N-(Trimethylcyclopenten-1-yl)-N-isobutyl-α-dichlorpropionamid
48. N-(Trimethylcyclopenten-1-yl)-N-isobutyl-acetamid
49. N-(Trimethylcyclohexen-1-yl)-N-butyl-α-chloracetamid
50. N-(Trimethylcyclopenten-a-yl)-N-butyl-α-chloracetamid
51. N-(Trimethylcyclohexen-1-yl)-N-methoxy-äthyl-α-chloracetamid
52. N-(Trimethylcyclohexen-1-yl)-N-äthoxyäthyl-α-chloracetamid
53. N-(Trimethylcyclohexen-1-yl)-N-methoxy-propyl-α-chloracetamid
54. N-(Trimethylcyclohexen-1-yl)-N-äthoxy-propyl-α-chloracetamid
55. N-(Trimethylcyclohexen-1-yl)-N-butoxy-propyl-α-chloracetamid
56. N-(Trimethylcyclohexen-1-yl)-N-methyl-α-bromacetamid
57. N-(Trimethylcyclohexen-1-yl)-N-äthyl-α-bromacetamid
58. N-(Trimethylcyclohexen-1-yl)-N-isobutyl-α-bromacetamid
59. N-(Trimethylcyclopenten-1-yl)-N-methyl-α-bromacetamid
60. N-(Trimethylcyclohexen-1-yl)-N-methoxy-äthyl-α-bromacetamid
61. N-(Trimethylcyclohexen-1-yl)-N-allyl-α-chloracetamid
62. N-(Trimethylcyclopenten-1-yl)-N-allyl-α-chloracetamid
63. N-(Trimethylcyclohexen-1-yl)-N-allyl-α-bromacetamid

Weiterer Gegenstand der Erfindung ist ein Verfahren zur selektiven Behandlung von Nutzpflanzenkulturen, welches dadurch gekennzeichnet ist, dass man zur Behandlung der Kulturen vor und/oder nach dem Auflaufen der Saat Verbindungen der Formel I verwendet. Die Wirkstoffmenge kann in einer Menge von 0,5 bis 10 kg/10 000 m², vorzugsweise 2–5 kg/10 000 m², auf die Kulturen aufgebracht werden.

Bei den Verbindungen der Formel I handelt es sich um Herbizide, welche unter anderem im Vorauflaufverfahren ein breites Selektivitätsspektrum gegenüber zahlreichen Kulturpflanzen und eine sehr gute Wirkung auf Gräser und einkeimblättrige Unkräuter aufweisen. Auch im Nachauflaufverfahren können gute Wirkungen festgestellt werden. Die vorliegenden N-(Trimethyl-cycloalkenyl)-N-alkyl-acetamide sind selektiv unter anderem bei dikotylen Kulturpflanzen wie Winterraps (Brassica rapa), Zuckerrüben (Beta vulgaris), Soja (Soja hispida) und Baumwolle. Zudem liegt Selektivität bei der monokotylen Kulturpflanze Mais (Zea mays) vor. Das breite Wirkungsspektrum der erfindungsgemässen Verbindungen gegen Gräser, wie Hühnerhirse (Echinochloa crusgalli), Bluthirse (Digitaria sanguinalis), grüne Borstenhirse (Setaria viridis), Fadenhirse (Digitaria ischaemum) und Ackerfuchsschwanz (Alopecurus myosoroides), sowie einige zweikeimblättrige Unkräuter, wie Kamille (Anthemis spec.), Vogelmiere (Stellaria media), Amaranth (Amaranthus retroflexus), Taubnessel (Lamium purpureum) und Weisser Gänsefuss (Chenopodium album) lässt eine Anwendung in einer Reihe von Kulturen, wie Winterraps (Brassica rapa), Mais (Zea mays) oder Zuckerrüben (Beta vulgaris) sehr interessant erscheinen.

Die erfindungsgemässen Verbindungen wirken bereits befriedigend in Aufwandmengen ab 0,5 kg/10 000 m², berechnet auf reinen Wirkstoff, und können trotz ihres breiten Wirkungsspektrums in den oben genannten Kulturen ohne sichtbare Schädigung der Kulturpflanzen eingesetzt werden. Die ausserordentliche Kulturverträglichkeit bedeutet insofern einen bedeutenden Fortschritt, als bekannt ist, dass viele eingeführte Herbizide nur dann eine ausreichende biologische Wirksamkeit gegen Unkräuter zeigen, wenn bereits die Schädigungsschwelle bei den Kulturpflanzen leicht überschritten ist.

Auf verschiedene Getreidearten – zum Beispiel Wintergerste – wirken die N-(Trimethyl-cycloalkenyl)-N-alkylacetamide hemmend auf das Längenwachstum, ohne jedoch zu Ertragsminderungen zu führen; sie können deshalb auch zusätzlich als wachstumsregulierende Mittel eingesetzt werden. Der grosse Vorteil der erfindungsgemässen Verbindungen liegt neben der grossen Anwendungsbreite zusätzlich darin, dass keine aromatischen Gruppen im Molekül vorhanden sind und damit schwerwiegende und schwer zu überschauende Rückstandsprobleme entfallen. Damit entfällt auch gleichzeitig automatisch das in vielen Herbiziden enthaltene aromatisch gebundene Halogen, das enorme ökologische Rückstandsprobleme aufweist.

Photosynthesehemmung findet durch die neuen Verbindungen, wenn überhaupt, nur im geringen Masse statt. Einige der neuen Verbindungen zeigen zusätzlich auch fungizide Wirkungen.

Für den Einsatz in Raps-, Rüben-, Sojabohnen-, Baumwoll- und Mais-Kulturen sind besonders vorteilhaft solche Wirkstoffe mit 6er Ringen der Formel I einsetzbar, bei denen

$X_3$ Chlor oder Brom in Kombination mit jeweils zwei Wasserstoffen sind,

R ein unverzweigter oder verzweigter gesättigter Alkylrest mit 1 bis 4 Kohlenstoffatomen und die drei Methylgruppen in 3,3,5- bzw. 3,5,5-Stellung angeordnet sind.

Die besten Wirkungen wurden erzielt, sofern $X_3$ Chlor und zwei Wasserstoffe und R Methyl sind. In diesem Falle wird eine volle Verträglichkeit bei 3–4 kg/ha im Dosis-Wirkungstest bei Mais, Rübenarten, Sojabohnen, Baumwolle und Raps gefunden, was in dieser Vielseitigkeit deutlich die Toleranzen der getesteten Vergleichsmittel bekannter Herbizide übersteigt.

Andere vergleichbare cyclische Ketone als der Formel II bedingen einen verminderten Wirkungsgrad.

Die erfindungsgemässen Verbindungen oder deren Mischungen werden vorteilhafterweise im Gemisch mit mindestens einem Hilfsmittel aus der Gruppe Träger-, Verdünnungs-, Netz-, Dispergier- und Emulgiermittel angewendet, wobei die letzten drei auch als Konditionierungsmittel bezeichnet werden.

Zur Vereinfachung wird im folgenden die Bezeichnung «Wirkstoff» anstelle des Ausdrucks N-(Cycloalkenyl)-N-alkyl-acetamide verwendet.

Die herbiziden Zubereitungen dieser Erfindung enthalten wenigstens einen Wirkstoff und mindestens ein Hilfsmittel in flüssiger, pastöser oder fester Form. Die Zubereitungen können durch Mischen des Wirkstoffs mit mindestens einem Hilfsmittel, einschliesslich Verdünnungs-, Streck-, Trägern- und Konditionierungsmitteln unter Bildung von Zubereitungen in Form fein verteilter partikelförmiger Feststoffe, Granulate, Pellets, Lösungen, Dispersionen oder Emulsionen hergestellt werden. Es kann daher der Wirkstoff mit einem Hilfsmittel, wie einem fein verteilten Feststoff, einer Flüssigkeit organischen Ursprungs, Wasser, einem Netzmittel, einem Dispergiermittel, einem Emulgiermittel oder irgendeiner geeigneten Kombination dieser Mittel verwendet werden.

Typische feinverteilte Träger und Streckmittel für die Pflanzenwuchs-regulierenden Verbindungen dieser Erfindung können beispielsweise Talkum, Tone, Bimsstein, Siliciumdioxid, (Quarz), Kieselsäuren, Diatomeenerde, Kreide, Walnussmehl, Fullererde, Salz, Schwefel, pulverisierter Kork, pulverisiertes Holz, Holzkohle, gemahlene Maiskolben, Illitton, Tabakstaub, Vulkanasche, Hülsenmehl von Baumwollsamen, Weizenmehl, Sojabohnenmehl, Tripel und dergleichen enthalten.

Typische flüssige Verdünnungsmittel sind Wasser, Kerosin, Dieselöl, Hexan, Ketone, wie Aceton, Toluol, Benzol, Xylol, Tetrahydronaphthalin bzw. allgemeine Aromatenfraktionen, Alkohole, Glykole, Äthylendichlorid und dergleichen.

Die herbiziden Zubereitungen dieser Erfindung, besonders Flüssigkeiten und netzbare Partikel, enthalten gewöhnlich zusätzlich als Konditionierungsmittel ein oder mehrere oberflächenaktive Mittel in Mengen, um eine gegebene Zubereitung in Wasser oder Öl leicht dispergierbar zu machen.

Die Bezeichnung «oberflächenaktives Mittel» beinhaltet ohne Einschränkung Netz-, Dispergier-, Suspendier- und Emulgiermittel.

Die Bezeichnung «herbizide Zubereitung», wie sie hier verwendet wird, bedeutet nicht nur Zubereitungen in einer zur Verwendung geeigneten Form, sondern ebenso Konzentrate, die mit einer geeigneten Menge Flüssigkeit oder festem Hilfsmittel vor der Verwendung verdünnt bzw. gestreckt werden müssen.

Die Wirkstoffe können sowohl allein als auch in Kombination mit anderen Wirkstoffklassen angewendet werden. So können sowohl andere herbizide Stoffe, wie chlorierte Phenoxycarbonsäuren, substituierte Harnstoffe, Triazine, Carbamate und andere, als auch Stoffe mit fungizider Wirkung, wie Thiokohlensäurederivate, Thiocarbamate, Isothiocyanate, Carbonsäureimide, als auch mit insektizider Wirkung, wie Chlorkohlenwasserstoffe und Phosphorsäureester, in gewünschter Kombination beigemischt werden, um spezielle Effekte zu erzielen oder um das ohnehin breite Wirkungsspektrum noch wieter auszudehnen.

Die nachfolgenden Beispiele erläutern die Aufbereitung der Wirkstoffe für eine praktische Anwendung, deren Anwendung sowie die erzielten Wirkungen.

Als Vergleichssubstanzen dienten neben bekannten Handelsprodukten, wie Atrazin, Diallate, Pyrazon, Dimethachlor und Trifluralin auch N,N-Diallylchloracetamid nach US-PS 2 864 683,
N-(Isopropyl-2-methylpropen-1-yl)-N-methoxyäthylchloracetamid
nach DE-OS 2 526 868,
N-(Trimethylcyclohexadien-1-yl)-N-äthoxyäthylchloracetamid
nach DE-OS 2 045 380,
N-Benzyl-N-isopropyl-trimethylacetamid
nach US-PS 3 707 366, sowie
N-(2,6-Dimethylphenyl-N-methoxyäthyl-α-chloracetamid
nach DE-OS 2 305 495.

Herstellung der Emulsionskonzentrate

a) 20 Gewichtsteile Wirkstoff gemäss Beispiel 1 wurden mit 180 Gewichtsteilen Xylol (techn. Gemisch) und 20 Gewichtsteilen eines Emulgators, der eine Mischung aus anionischen und nichtionischen Tensiden darstellt und im Handel unter der Bezeichnung MULSIFAN® RT 18 erhältlich ist, vermischt. Das Emulsionskonzentrat wurde dann vor der Anwendung auf die entsprechenden Gebrauchskonzentrationen mit Wasser verdünnt.
b) 600 Gewichtsteile Wirkstoff gemäss Beispiel 1 wurden mit 60 Gewichtsteilen des gleichen Emulgators wie in Beispiel a) ohne zusätzliche Lösungsmittel zum gebrauchsfertigen Emulsionskonzentrat vermischt. Bei niedriger Temperatur kann der Wirkstoff auskristallisieren. Durch leichtes Erwärmen des Gemisches kann jedoch wieder ein homogenes Emulsionskonzentrat erhalten werden, das in seinen Eigenschaften voll dem Ausgangskonzentrat entspricht.

Applikation der Wirkstoffe

Im Gewächshaustest wurden die in der Tabelle I angeführten erfindungsgemässen Verbindungen in einer Aufwandmenge von 1–4 kg/10 000 $m^2$ bezogen auf reinen Wirkstoff, suspendiert in 1200 l Wasser/10 000 $m^2$, auf die in der Tabelle I angegebenen Testpflanzen im Vorauflauf auf die Bodenoberfläche vor dem Keimen der Samen appliziert.

Als Vergleich wurden folgende Wirkstoffe eingesetzt.

Vergleich a:
N-(Isopropyl-2-methylpropen-1-yl)-N-methoxyäthylchloracetamid
gemäss DE-OS 2 526 868

Vergleich b:
N-Benzyl-N-isopropyl-trimethylacetamid
gemäss US-PS 3 707 366
Handelsname: BUTAM®

Vergleich c:
N-(2,6-Dimethylphenyl)-N-methoxyäthyl-α-chloracetamid
gemäss DE-OS 2 305 495
Handelsname: TERIDOX®

Vergleich d:
N,N-Diallychloracetamid
gemäss US-PS 2 864 683
Handelsname: RANDOX®

Vergleich e:
N-(2,6-Diäthylphenyl)-N-methoxymethyl-α-chloracetamid
Handelsname: LASSO®

Tabelle II zeigt ausgewählte Beispiele, welche die grosse Wirksamkeit der erfindungsgemässen Substanzen selbst bei kleinen Aufwandmengen im Vergleich zu handelsüblichen Produkten deutlich machen.

Tabelle I

| Beispiel | 1 | | | | 2 | | | | 8 | | | | 14 | | | | 20 | | | |
|---|---|---|---|---|---|---|---|---|---|---|---|---|---|---|---|---|---|---|---|---|
| Aufwandsmenge kg/ha | 1 | 2 | 3 | 4 | 1 | 2 | 3 | 4 | 1 | 2 | 3 | 4 | 1 | 2 | 3 | 4 | 1 | 2 | 3 | 4 |
| Testpflanzen | | | | | | | | | | | | | | | | | | | | |
| Ackersenf | 5 | 5 | 4 | 4 | 5 | 5 | 5 | 5 | 5 | 5 | 4,5 | 4 | | | | | 5 | 5 | 5 | 5 |
| Tomate | 4 | 3 | 3 | 2 | 5 | 5 | 5 | 5 | 5 | 5 | 4,5 | 4 | | | | | 5 | 5 | 5 | 5 |
| Hafer | 4 | 4 | 3 | 3 | 5 | 5 | 5 | 4 | 4 | 3 | 2,5 | 2 | 4 | 3 | 2 | 2 | 5 | 5 | 5 | 5 |
| Hühnerhirse | 1 | 1 | 1 | 1 | 1 | 1 | 1 | 1 | 1 | 1 | 1 | 1 | 1 | 1 | 1 | 1 | 1 | 1 | 1 | 1 |
| Flughafer | 3 | 2 | 1,5 | 1,5 | 5 | 5 | 5 | 5 | 1,5 | 1 | 1 | 1 | 3 | 2 | 1 | 1 | 3 | 5 | 5 | 5 |
| Ackerfuchsschwanz | 1 | 1 | 1 | 1 | 1 | 1 | 1 | 1 | 1 | 1 | 1 | 1 | 1 | 1 | 1 | 1 | 2 | 2 | 1 | 1 |
| Vogelmiere | 3 | 2 | 1,5 | 1,5 | 5 | 5 | 4 | 4 | 4 | 4 | 3 | 2 | 2 | 1 | 1 | 1 | | | | 5 |
| Klettenlabkraut | 4 | 4 | 4 | 2 | 4 | 2,5 | 1,5 | 1,5 | 2 | 1 | 1 | 1 | 4 | 3 | 2 | 2 | | | | 5 |
| Kornblume | 5 | 5 | 5 | 4 | 5 | 5 | 5 | 5 | 4 | 3 | 2,5 | 2,5 | 5 | 5 | 5 | 5 | 5 | 5 | 5 | 5 |
| Kamille | 1 | 1 | 1 | 1 | 5 | 5 | 5 | 5 | 1,5 | 1 | 1 | 1 | 3 | 1,5 | 1 | 1 | 5 | 4 | 4 | 4 |
| Taubnessel | 1 | 1 | 1 | 1 | 3 | 2 | 2 | 1,5 | 1 | 1 | 1 | 1 | 1 | 1 | 1 | 1 | 4 | 3 | 3 | 2 |
| Franzosenkraut | 2 | 1 | 1 | 1 | 2,5 | 2 | 1,5 | 1,5 | 1,5 | 1 | 1 | 1 | 1,5 | 1,5 | 1 | 1 | 5 | 4 | 4 | 2,5 |
| Amaranth | 2 | 1,5 | 1,5 | 1,5 | 5 | 5 | 4 | 4 | 2 | 1,5 | 1 | 1 | 1 | 1 | 1 | 1 | | | | 5 |
| Gänsefuss | 1,5 | 1 | 1 | 1 | 4 | 3 | 3 | 3 | 3 | 1,5 | 1 | 1 | 1,5 | 1 | 1 | 1 | 5 | 4 | 4 | 3 |
| Wicke | 2,5 | 2 | 1 | 1 | 5 | 5 | 4 | 4 | 1,5 | 1 | 1 | 1 | 4 | 3 | 3 | 2,5 | 5 | 5 | 4 | 4 |
| Zuckerrübe | 5 | 5 | 5 | 5 | 5 | 5 | 4 | 3,5 | 4,5 | 4 | 2 | 2 | 5 | 4 | 4 | 4 | 5 | 5 | 5 | 5 |
| Winterraps | 5 | 5 | 5 | 5 | 5 | 5 | 5 | 5 | 5 | 5 | 5 | 5 | 5 | 5 | 5 | 5 | 5 | 5 | 5 | 5 |
| Knöterich | 5 | 5 | 4 | 2,5 | 5 | 5 | 5 | 5 | 4,5 | 3 | 2 | 1,5 | 5 | 4 | 4 | 4 | 5 | 5 | 4 | 3,5 |
| Mais | 5 | 5 | 4 | 4 | 5 | 5 | 5 | 5 | 5 | 4,5 | 4 | 3,5 | | | | | 5 | 5 | 5 | 5 |
| Klatschmohn | 1,5 | 1 | 1 | 1 | 4 | 4 | 3 | 3 | 1 | 1 | 1 | 1 | 1,5 | 1 | 1 | 1 | 5 | 5 | 4 | 2 |

Tabelle I

| Beispiel | 31 | | | | 37 | | | | 51 | | | | 61 | | | | 62 | | | |
|---|---|---|---|---|---|---|---|---|---|---|---|---|---|---|---|---|---|---|---|---|
| Aufwandsmenge kg/ha | 1 | 2 | 3 | 4 | 1 | 2 | 3 | 4 | 1 | 2 | 3 | 4 | 1 | 2 | 3 | 4 | 1 | 2 | 3 | 4 |
| Testpflanzen | | | | | | | | | | | | | | | | | | | | |
| Ackersenf | 5 | 5 | 5 | 5 | | | | 5 | 5 | 5 | 4 | 4 | 5 | 5 | 4 | 4 | 5 | 5 | 4 | 4 |
| Tomate | 5 | 1 | 2 | 2 | | | | 4 | 5 | 5 | 4 | 3 | 3,5 | 2 | 2 | 1,5 | 5 | 4 | 4 | 2,5 |
| Hafer | 4 | 3 | 2 | 1 | 5 | 5 | 4 | 4 | 4 | 3 | 3 | 2 | 1,5 | 1 | 1 | 1 | 5 | 5 | 4,5 | 4 |
| Hühnerhirse | 1 | 1 | 1 | 1 | 1 | 1 | 1 | 1 | 1 | 1 | 1 | 1 | 1 | 1 | 1 | 1 | 1 | 1 | 1 | 1 |
| Flughafer | 3 | 3 | 2 | 1 | 4 | 4 | 3 | 2 | 2 | 1,5 | 1 | 1 | 1 | 1 | 1 | 1 | 4 | 2 | 2 | 1,5 |
| Ackerfuchsschwanz | 1 | 1 | 1 | 1 | 3 | 2 | 2 | 1 | 1 | 1 | 1 | 1 | 1 | 1 | 1 | 1 | 1 | 1 | 1 | 1 |
| Vogelmiere | 3 | 2,5 | 2 | 1 | 2,5 | 2 | 1 | 1 | 5 | 3 | 2,5 | 1,5 | 1,5 | 1 | 1 | 1 | 3,5 | 3,5 | 3 | 2,5 |
| Klettenlabkraut | 5 | 4 | 4 | 3,5 | 5 | 4,5 | 4,5 | 3 | 3 | 2 | 1,5 | 1,5 | 2 | 2 | 1,5 | 1,5 | 4 | 4 | 3 | 3 |
| Kornblume | 5 | 5 | 5 | 4 | 5 | 5 | 4 | 4 | 4 | 4 | 4 | 4 | 4 | 3,5 | 3 | 3 | 5 | 5 | 4 | 4 |
| Kamille | 4 | 4 | 2 | 1,5 | 5 | 5 | 4 | 3 | 2 | 1 | 1 | 1 | 1 | 1 | 1 | 1 | 1,5 | 1 | 1 | 1 |
| Taubnessel | 2 | 1,5 | 1 | 1 | 2 | 2 | 1 | 1 | 2 | 2 | 1 | 1 | 1 | 1 | 1 | 1 | 2 | 1 | 1 | 1 |
| Franzosenkraut | 3,5 | 3 | 2 | 2 | 5 | 4 | 4 | 2,5 | 1 | 1 | 1 | 1 | 1,5 | 1 | 1 | 1 | 1,5 | 1,5 | 1,5 | 1 |
| Amaranth | 2 | 1 | 1 | 1 | 1 | 1 | 1 | 1 | 4 | 3 | 2 | 1,5 | 3,5 | 2 | 1,5 | 1,5 | 4 | 4 | 3 | 2 |
| Gänsefuss | 2 | 1,5 | 1 | 1 | 3 | 2 | 1,5 | 1 | 1 | 1 | 1 | 1 | 1 | 1 | 1 | 1 | 2,5 | 2 | 1,5 | 1,5 |
| Wicke | 5 | 5 | 5 | 4 | 5 | 4 | 4 | 3 | 1 | 1 | 1 | 1 | 1 | 1 | 1 | 1 | 2 | 2 | 2 | 1,5 |
| Zuckerrübe | 5 | 5 | 4 | 4 | 5 | 4 | 4 | 4 | 5 | 4 | 4 | 3 | 4 | 3 | 3 | 2,5 | 5 | 4 | 3,5 | 3,5 |
| Winterraps | 5 | 5 | 5 | 5 | 5 | 5 | 5 | 5 | 5 | 5 | 5 | 5 | 5 | 5 | 5 | 5 | 5 | 5 | 5 | 5 |
| Knöterich | 5 | 5 | 5 | 5 | 5 | 5 | 5 | 5 | 3 | 2 | 2 | 2 | 3,5 | 2 | 2 | 1,5 | 4 | 4 | 3,5 | 3,5 |
| Mais | 4 | 3,5 | 3,5 | 3 | 4 | 4 | 4 | 4 | 4 | 4 | 3,5 | 3 | 4 | 4 | 4 | 4 | 5 | 5 | 5 | 5 |
| Klatschmohn | 3 | 3 | 2 | 2 | 5 | 5 | 4 | 2 | | | | | 5 | 4 | 3 | 2 | | | | |

Tabelle I

| Beispiel | Vergleich a | | | | Vergleich b | | | | Vergleich c | | | | Vergleich d | | | |
|---|---|---|---|---|---|---|---|---|---|---|---|---|---|---|---|---|
| Aufwandsmenge kg/ha | 1 | 2 | 3 | 4 | 1 | 2 | 3 | 4 | 1 | 2 | 3 | 4 | 1 | 2 | 3 | 4 |
| Testpflanzen | | | | | | | | | | | | | | | | |
| Ackersenf | 5 | 4,5 | 4 | 2,5 | 5 | 5 | 5 | 4 | 4 | 3 | 2 | 1,5 | | | | |
| Tomate | 5 | 4,5 | 3,5 | 2 | 5 | 4 | 4 | 3,5 | 1,5 | 1 | 1 | 1 | | | | |
| Hafer | 5 | 4 | 4 | 3 | 3 | 1 | 1 | 1 | 1,5 | 1 | 1 | 1 | 4 | 3 | 2 | 2 |
| Hühnerhirse | 1 | 1 | 1 | 1 | 1 | 1 | 1 | 1 | 1 | 1 | 1 | 1 | 1 | 1 | 1 | 1 |
| Flughafer | 4 | 3 | 1,5 | 1 | 2 | 1 | 1 | 1 | 1,5 | 1 | 1 | 1 | 4 | 2 | 2 | 2 |
| Ackerfuchsschwanz | 2 | 1,5 | 1 | 1 | 1 | 1 | 1 | 1 | 1 | 1 | 1 | 1 | 2,5 | 2 | 1 | 1 |
| Vogelmiere | 4 | 2 | 1 | 1 | 2,5 | 2 | 2 | 2 | 1 | 1 | 1 | 1 | 3 | 2 | 2 | 2 |
| Klettenlabkraut | 2 | 1,5 | 1 | 1 | 4 | 4 | 3,5 | 3 | 1,5 | 1,5 | 1 | 1 | 5 | 5 | 4 | 4 |
| Kornblume | 5 | 4 | 3 | 2 | 5 | 5 | 5 | 4 | 5 | 4 | 4 | 2,5 | 5 | 5 | 4 | 3,5 |
| Kamille | 1 | 1 | 1 | 1 | 2 | 1,5 | 1 | 1 | 1 | 1 | 1 | 1 | 3 | 3 | 2 | 2 |
| Taubnessel | 1 | 1 | 1 | 1 | 2 | 1,5 | 1 | 1 | 2 | 1 | 1 | 1 | 2 | 1 | 1 | 1 |
| Franzosenkraut | | | | | 2 | 2 | 1,5 | 1,5 | 1 | 1 | 1 | 1 | 5 | 5 | 4 | 4 |
| Amaranth | 1,5 | 1 | 1 | 1 | 5 | 4 | 4 | 3 | 1 | 1 | 1 | 1 | 2 | 2 | 2 | 1,5 |
| Gänsefuss | 1,5 | 1 | 1 | 1 | 2 | 2 | 1,5 | 1,5 | 1,5 | 1 | 1 | 1 | 3 | 2 | 2 | 2 |
| Wicke | | | | | 2,5 | 1,5 | 1,5 | 1,5 | 2 | 1,5 | 1 | 1 | 5 | 4 | 4 | 3 |
| Zuckerrübe | 4 | 2,5 | 1,5 | 1,5 | 4 | 4 | 3,5 | 3,5 | | | | | 4 | 3,5 | 3 | 2 |
| Winterraps | 4,5 | 4 | 2,5 | 2 | 5 | 5 | 5 | 4,5 | 5 | 5 | 5 | 4 | 5 | 5 | 5 | 5 |
| Knöterich | 3,5 | 2 | 1,5 | 1,5 | 4 | 3 | 2,5 | 2,5 | 1,5 | 1,5 | 1 | 1 | 5 | 5 | 5 | 4 |
| Mais | 4 | 4 | 3 | 3 | 5 | 5 | 4 | 4 | 1 | 1 | 1 | 1 | 5 | 5 | 5 | 4 |
| Klatschmohn | 4 | 3 | 2 | 2 | 4 | 3 | 3 | 2 | | | | | 5 | 5 | 4 | 4 |

| Beispiel | 1 | | | | 2 | | | | 8 | | | | 14 | | | | 20 | | | |
|---|---|---|---|---|---|---|---|---|---|---|---|---|---|---|---|---|---|---|---|---|
| Aufwandsmenge kg/ha | 1 | 2 | 3 | 4 | 1 | 2 | 3 | 4 | 1 | 2 | 3 | 4 | 1 | 2 | 3 | 4 | 1 | 2 | 3 | 4 |
| Testpflanzen | | | | | | | | | | | | | | | | | | | | |
| Stiefmütterchen | 3 | 3 | 2,5 | 2 | 5 | 5 | 5 | 5 | 4 | 4 | 3 | 2,5 | 5 | 5 | 4 | 4 | 5 | 5 | 4 | 4 |
| Borstenhirse | 1 | 1 | 1 | 1 | 1 | 1 | 1 | 1 | 1 | 1 | 1 | 1 | 1 | 1 | 1 | 1 | 1 | 1 | 1 | 1 |
| Bluthirse | 1 | 1 | 1 | 1 | 1 | 1 | 1 | 1 | 1 | 1 | 1 | 1 | 1 | 1 | 1 | 1 | 1 | 1 | 1 | 1 |
| Fadenhirse | 1 | 1 | 1 | 1 | 1 | 1 | 1 | 1 | 1 | 1 | 1 | 1 | 1 | 1 | 1 | 1 | 1,5 | 1 | 1 | 1 |
| Sommergerste | 3 | 3 | 2,5 | 2 | 5 | 5 | 4 | 4 | 4 | 3 | 3 | 2 | | | | | 5 | 5 | 5 | 5 |
| Sommerweizen | 3 | 3 | 3 | 3 | 4 | 4 | 4 | 4 | 3 | 2 | 2 | 1,5 | | | | | 5 | 5 | 5 | 5 |
| Windhalm | 1 | 1 | 1 | 1 | 1 | 1 | 1 | 1 | 1 | 1 | 1 | 1 | 1 | 1 | 1 | 1 | 2 | 1 | 1 | 1 |
| Sojabohne | 4 | 3 | 1 | 1 | 5 | 5 | 5 | 4 | 5 | 5 | 4 | 4 | 5 | 5 | 5 | 4,5 | 5 | 5 | 4,5 | 4 |
| Wintergerste | 4 | 4 | 3 | 3 | 4 | 4 | 4 | 4 | 4 | 3,5 | 2,5 | 2,5 | 4 | 3 | 3 | 2 | 5 | 5 | 5 | 5 |
| Winterweizen | 4 | 3 | 3 | 3 | 5 | 5 | 5 | 4 | 2,5 | 2 | 2 | 1,5 | 3 | 2 | 2 | 2 | 5 | 5 | 5 | 5 |
| Roggen | 4 | 4 | 3 | 2,5 | | | | | | | | | | | | | | | | |
| Quecke | 5 | 5 | 4 | 4 | 4,5 | 4 | 4 | 4 | 4 | 3 | 2,5 | 2 | 4 | 4 | 3 | 3 | 5 | 5 | 4 | 4 |

1 = volle Wirkung; Abtötung der Pflanzen 5 = keine Wirkung; Pflanzen wie unbehandelt

| Beispiel | 31 | | | | 37 | | | | 51 | | | | 61 | | | | 62 | | | |
|---|---|---|---|---|---|---|---|---|---|---|---|---|---|---|---|---|---|---|---|---|
| Aufwandsmenge kg/ha | 1 | 2 | 3 | 4 | 1 | 2 | 3 | 4 | 1 | 2 | 3 | 4 | 1 | 2 | 3 | 4 | 1 | 2 | 3 | 4 |
| Testpflanzen | | | | | | | | | | | | | | | | | | | | |
| Stiefmütterchen | 5 | 4,5 | 4 | 4 | 5 | 5 | 5 | 4 | | | | | 5 | 4 | 4 | 4 | | | | |
| Borstenhirse | 1 | 1 | 1 | 1 | 1 | 1 | 1 | 1 | 1 | 1 | 1 | 1 | 1 | 1 | 1 | 1 | 1 | 1 | 1 | 1 |
| Bluthirse | 1 | 1 | 1 | 1 | 1 | 1 | 1 | 1 | 1 | 1 | 1 | 1 | 1 | 1 | 1 | 1 | 1 | 1 | 1 | 1 |
| Fadenhirse | 1 | 1 | 1 | 1 | 1 | 1 | 1 | 1 | 1 | 1 | 1 | 1 | 1 | 1 | 1 | 1 | 1 | 1 | 1 | 1 |
| Sommergerste | | | | | | | | | 4 | 3 | 2,5 | 2,5 | 4,5 | 2 | 1,5 | 1,5 | 2 | 2 | 1,5 | 1 |
| Sommerweizen | | | | | | | | | 3,5 | 3 | 2 | 1,5 | 3 | 1,5 | 1 | 1 | 2 | 1,5 | 1,5 | 1 |
| Windhalm | 1 | 1 | 1 | 1 | 1 | 1 | 1 | 1 | 1 | 1 | 1 | 1 | 1 | 1 | 1 | 1 | 1 | 1 | 1 | 1 |
| Sojabohne | 5 | 5 | 4 | 4 | 5 | 5 | 5 | 5 | 5 | 5 | 5 | 5 | 5 | 4 | 4 | 4 | 5 | 5 | 5 | 4 |
| Wintergerste | 2 | 1 | 1 | 1 | 4 | 4 | 3 | 2 | 4 | 2 | 1,5 | 1 | 2,5 | 1,5 | 1 | 1 | 2,5 | 1,5 | 1,5 | 1 |
| Winterweizen | 2 | 2 | 1 | 1 | 3 | 3 | 1,5 | 1 | 2,5 | 2 | 2 | 1,5 | 2 | 1,5 | 1 | 1 | 2 | 1,5 | 1 | 1 |
| Roggen | | | | | | | | | 1,5 | 1,5 | 1 | 1 | 1,5 | 1 | 1 | 1 | 1,5 | 1 | 1 | 1 |
| Quecke | 5 | 4 | 2,5 | 2 | 5 | 5 | 4,5 | 4 | | | | | 5 | 5 | 4 | 4 | | | | |

1 = volle Wirkung; Abtötung der Pflanzen 5 = keine Wirkung; Pflanzen wie unbehandelt

Tabelle I

| Beispiel | Vergleich a | | | | Vergleich b | | | | Vergleich c | | | | Vergleich d | | | |
|---|---|---|---|---|---|---|---|---|---|---|---|---|---|---|---|---|
| Aufwandsmenge kg/ha | 1 | 2 | 3 | 4 | 1 | 2 | 3 | 4 | 1 | 2 | 3 | 4 | 1 | 2 | 3 | 4 |
| Testpflanzen | | | | | | | | | | | | | | | | |
| Stiefmütterchen | 4,5 | 4 | 3,5 | 3 | 3 | 3 | 2,5 | 2,5 | | | | | 5 | 5 | 5 | 4 |
| Borstenhirse | 1 | 1 | 1 | 1 | 1 | 1 | 1 | 1 | 1 | 1 | 1 | 1 | 1 | 1 | 1 | 1 |
| Bluthirse | 1 | 1 | 1 | 1 | 1 | 1 | 1 | 1 | 1 | 1 | 1 | 1 | 1,5 | 1 | 1 | 1 |
| Fadenhirse | 1 | 1 | 1 | 1 | 1 | 1 | 1 | 1 | 1 | 1 | 1 | 1 | 1,5 | 1 | 1 | 1 |
| Sommergerste | 4 | 3,5 | 2 | 1 | 4 | 2 | 1 | 1 | 4 | 2 | 1 | 1 | | | | |
| Sommerweizen | 2,5 | 2 | 2 | 1,5 | 3 | 1,5 | 1 | 1 | 1,5 | 1 | 1 | 1 | | | | |
| Windhalm | 1 | 1 | 1 | 1 | 1 | 1 | 1 | 1 | 1 | 1 | 1 | 1 | | | | |
| Sojabohne | 4 | 3 | 2 | 2 | 4 | 4 | 4 | 4 | 4 | 3 | 2 | 2 | 4 | 4 | 3,5 | 3,5 |
| Wintergerste | | | | | 2,5 | 1 | 1 | 1 | 1,5 | 1,5 | 1 | 1 | 5 | 4,5 | 4 | 4 |
| Winterweizen | 4,5 | 4 | 3 | 2 | 3 | 1,5 | 1 | 1 | 2 | 1,5 | 1 | 1 | 4 | 4 | 3,5 | 3,5 |
| Roggen | 5 | 4 | 3,5 | 3 | 1 | 1 | 1 | 1 | 1 | 1 | 1 | 1 | | | | |
| Quecke | | | | | 2 | 2 | 1,5 | 1,5 | | | | | 4,5 | 3,5 | 2 | 1,5 |

1 = volle Wirkung; Abtötung der Pflanzen
5 = keine Wirkung; Pflanzen wie unbehandelt

Tabelle II

| Beispiel | 8 | | | | 14 | | | | 63 | | | | Vergleich e | | | | Vergleich d | | | |
|---|---|---|---|---|---|---|---|---|---|---|---|---|---|---|---|---|---|---|---|---|
| Aufwandsmenge kg/ha | 0,063 | 0,125 | 0,25 | 0,5 | 0,063 | 0,125 | 0,25 | 0,5 | 0,063 | 0,125 | 0,25 | 0,5 | 0,063 | 0,125 | 0,25 | 0,5 | 0,063 | 0,125 | 0,25 | 0,5 |
| Testpflanzen | | | | | | | | | | | | | | | | | | | | |
| Borstenhirse | 1 | 1 | 1 | 1 | 1 | 1 | 1 | 1 | 1 | 1 | 1 | 1 | 3 | 2 | 1 | 1 | 3 | 1,5 | 1,5 | 1 |
| Bluthirse | 1 | 1 | 1 | 1 | 1 | 1 | 1 | 1 | 1,5 | 1 | 1 | 1 | 4 | 3 | 1 | 1 | 4 | 4 | 3 | 1,5 |
| Fadenhirse | 1 | 1 | 1 | 1 | 1 | 1 | 1 | 1 | 1 | 1 | 1 | 1 | 2 | 2 | 2 | 1 | 4 | 4 | 2 | 1,5 |
| Hühnerhirse | 1 | 1 | 1 | 1 | 1 | 1 | 1 | 1 | 1,5 | 1 | 1 | 1 | 4 | 2 | 1 | 1 | 5 | 4 | 4 | 1,5 |
| Ackerfuchsschwanz | 2 | 1 | 1 | 1 | 2 | 1 | 1 | 1 | 3,5 | 2 | 1 | 1 | 4 | 4 | 1,5 | 1 | 5 | 4 | 3,5 | 3,5 |
| Vogelmiere | | | 2 | 2 | | | 2 | 2 | 2 | 1,5 | 1,5 | 1,5 | | | 2 | 2 | | | 4 | 2 |
| Kornblume | | | 4 | 4 | | | 5 | 4 | | | | | | | | | | | 5 | 5 |
| Kamille | | | 2 | 2 | | | 2 | 2 | 5 | 4 | 4 | 4 | | | 3 | 3 | | | 4 | 3 |
| Taubnessel | | 3 | 2 | 2 | | 3,5 | 2 | 2 | | | 2 | 2 | | | 2 | 2 | | | 2 | 2 |
| Windhalm | 2 | 2 | 1 | 1 | 2 | 2 | 1 | 1 | 4 | 3 | 1 | 1 | 3 | 3 | 2 | 1,5 | 5 | 3 | 3 | 1,5 |

1 = volle Wirkung; Abtötung der Pflanzen
5 = keine Wirkung; Pflanzen wie unbehandelt

| | |
|---|---|
| Ackersenf | – Sinapsis alba |
| Tomate | – Solanum lycopersicum |
| Hafer | – Avena sativa |
| Hühnerhirse | – Echinochloa crusgalli |
| Flughafer | – Avena fatua |
| Ackerfuchsschwanz | – Alopecurus myosoroides |
| Vogelmiere | – Stellaria media |
| Klettenlabkraut | – Gallium aparine |
| Kornblume | – Centaurea cyanus |
| Kamille | – Anthemis spec. |
| Taubnessel | – Lamium purureum |
| Franzosenkraut | – Galeopsis tetrahit |
| Amaranth | – Amaranthus retroflexus |
| Gänsefuss | – Chenopodium album |
| Wicke | – Vicia angustifolla |
| Zuckerrübe | – Beta vulgaris |
| Winterraps | – Brassica rapa |
| Knöterich | – Polygonum spec. |
| Mais | – Zea mays |
| Klatschmohn | – Papaver rhoeas |

| | |
|---|---|
| Stiefmütterchen | – Viola arvensis |
| Borstenhirse | – Setaria viridis |
| Bluthirse | – Digitaria sanguinalis |
| Fadenhirse | – Digitaria ischaemun |
| Sommergerste | – Hordeum vulgare |
| Sommerweizen | – Triticum aestivum |
| Windhalm | – Apera spica-venti |
| Sojabohne | – Soja hispida |
| Wintergerste | – Hordeum sativum |
| Winterweizen | – Triticum aestivum |
| Roggen | – Secale cereale |
| Quecke | – Arropyron repens |

**Patentansprüche**

1. Vorauflauf- und Nachauflauf-Herbizide mit verbesserter biozider Wirkung gegen Ungräser und Unkräuter bei guter Verträglichkeit mit Nutzpflanzen, deren aktive Substanz aus α-substituiertem N-(Trimethyl-cycloalkenyl-)-N-alkylacetamid der Formel

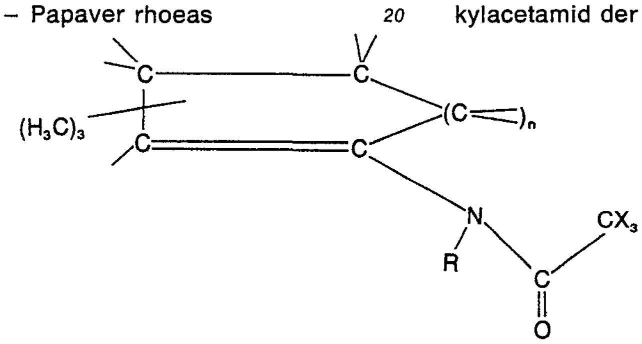

I.

mit n = 1 oder 2 und der Massgabe, dass die 3 Methylgruppen bei den 1-Cyclopentenderivaten (n = 1) nur in 3,3,5- oder 3,5,5- oder 2,4,4-Stellung und bei den 1-Cyclohexenderivaten (n = 2) nur in 3,3,5- oder 3,5,5-Stellung stehen dürfen und die übrigen Valenzen der C-Atome im Ring mit Wasserstoff besetzt sind, und dass

R ein geradekettiger oder verzweigter Alkyl- oder Alkoxyalkylrest mit 1 bis 6 C-Atomen oder ein gegebenenfalls mit $C_1$ bis $C_4$-Alkylgruppen substituierter Allylrest ist und

X Substituenten aus der Gruppe Wasserstoff, Methyl, Chlor und Brom in beliebiger Kombination bedeuten, jedoch mit der Massgabe, dass höchstens zwei dieser Substituenten H sein dürfen, besteht.

2. Vorauflauf- und Nachauflaufherbizide mit Substanzen der Formel I, in denen $-CX_3$ jeweils $-CH_2Cl$ bedeutet.

3. Vorauflauf- und Nachauflaufherbizid nach Anspruch 2, mit n = 1 und R = $CH_3$ und den 3 Methylgruppen in 3,5,5-Stellung.

4. Vorauflauf- und Nachauflaufherbizid nach Anspruch 2, mit n = 1 und R = $CH_3$ und den 3 Methylgruppen in 2,4,4-Stellung.

5. Vorauflauf- und Nachauflaufherbizid nach Anspruch 2 mit n = 1 und R = $-CH_3$ und den 3 Methylgruppen in 3,3,5-Stellung.

6. Vorauflauf- und Nachauflaufherbizid nach Anspruch 2 mit n = 1 und R = $-CH_2-CH = CH_2$ und den 3 Methylgruppen in 3,5,5-Stellung.

7. Vorauflauf- und Nachauflaufherbizid nach Anspruch 2 mit n = 1 und R = $-CH_2-CH = CH_2$ und den 3 Methylgruppen in 2,4,4-Stellung.

8. Vorauflauf- und Nachauflaufherbizid nach Anspruch 2 mit n = 1 und R = $-CH_2-CH = CH_2$ und den 3 Methylgruppen in 3,3,5-Stellung.

9. Vorauflauf- und Nachauflaufherbizid nach Anspruch 2, mit n = 2 und R = $-CH_3$ und den 3 Methylgruppen in 3,5,5-Stellung.

10. Vorauflauf- und Nachauflaufherbizid nach Anspruch 2 mit n = 2 und R = $-CH_3$ und den 3 Methylgruppen in 3,3,5-Stellung.

11. Vorauflauf- und Nachauflaufherbizid nach Anspruch 2 mit n = 2 und R = $-CH_2-CH = CH_2$ und den 3 Methylgruppen in 3,5,5-Stellung.

12. Vorauflauf- und Nachauflaufherbizid nach Anspruch 2 mit n = 2 und R = $-CH_2-CH = CH_2$ und den 3 Methylgruppen in 3,3,5-Stellung.

13. Mischungen der Vorauflauf- und Nachauflaufherbizide gemäss den Ansprüchen
3 bis 5 bzw.
6 bis 8 bzw.
9 und 10 bzw.
11 und 12,
wobei jede Einzelverbindung zu mindestens 1 Gew.-% in den Mischungen enthalten ist.

14. Verwendung der Vorauflauf- und Nachauflaufherbizide nach einem oder mehreren der Ansprüche 1 bis 13 in Mengen von 0,5 bis 10 kg des oder der jeweiligen Wirkstoffe je 10 000 m² der Nutzpflanzenkulturen.

15. Verwendung der Vorauflauf- und Nachauflaufherbizide nach einem oder mehreren der Ansprüche 1 bis 13 im Gemisch mit mindestens einem Hilfsmittel aus der Gruppe der Träger-, Verdünnungs-, Netz-, Dispergier- und Emulgiermittel.

**Claims**

1. Pre-emergence and post-emergence herbicides having an improved biocidal action against graminaceous weeds and broad-leaved weeds, coupled with good tolerance by useful plants, the active substance of which comprises an α-substituted N-(trimethyl-cycloalkenyl)-N-alkylacetamide of the formula

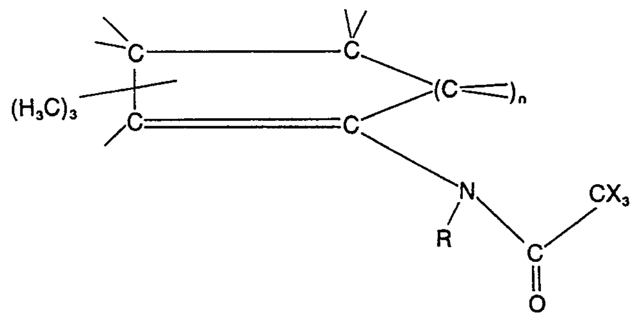

I.

in which n = 1 or 2, and with the proviso that the 3 methyl groups may only be in the 3,3,5- or 3,5,5- or 2,4,4-position in the case of the 1-cyclopentene derivatives (n = 1), and only in the 3,3,5- or 3,5,5-position in the case of the 1-cyclohexene derivatives (n = 2), and the remaining valences of the C atoms in the ring are occupied by hydrogen, and that R is a straight-chain or branched alkyl or alkoxyalkyl radical with 1 to 6 C atoms or an allyl radical which is optionally substituted by $C_1$ to $C_4$-alkyl groups and the radical X denotes substituents from the group comprising hydrogen, methyl, chlorine and bromine, in any desired combination, but with the proviso that at most two of these substituents may be H.

2. Pre-emergence and post-emergence herbicides containing substances of the formula I in which $-CX_3$ in each case denotes $-CH_2Cl$.

3. Pre-emergence and post-emergence herbicide according to Claim 2 in which n = 1 and R = $-CH_3$ and the 3 methyl groups are in the 3,5,5-position.

4. Pre-emergence and post-emergence herbicide according to Claim 2, in which n = 1 and R = $-CH_3$ and the 3 methyl groups are in the 2,4,4-position.

5. Pre-emergence and post-emergence herbicide according to Claim 2, in which n = 1 and R = $-CH_3$ and the 3 methyl groups are in the 3,3,5-position.

6. Pre-emergence and post-emergence herbicide according to Claim 2, in which n = 1 and R = $-CH_2-CH=CH_2$ and the 3 methyl groups are in the 3,5,5-position.

7. Pre-emergence and post-emergence herbicide according to Claim 2, in which n = 1 and R = $-CH_2-CH=CH_2$ and the 3 methyl groups are in the 2,4,4-position.

8. Pre-emergence and post-emergence herbicide according to Claim 2, in which n = 1 and R = $-CH_2-CH=CH_2$ and the 3 methyl groups are in the 3,3,5-position.

9. Pre-emergence and post-emergence herbicide according to Claim 2, in which n = 2 and R = $-CH_3$ and the 3 methyl groups are in the 3,5,5-position.

10. Pre-emergence and post-emergence herbicide according to Claim 2, in which n = 2 and R = $-CH_3$ and the 3 methyl groups are in the 3,3,5-position.

11. Pre-emergence and post-emergence herbicide according to Claim 2, in which n = 2 and R = $-CH_2-CH=CH_2$ and the 3 methyl groups are in the 3,5,5-position.

12. Pre-emergence and post-emergence herbicide according to Claim 2, in which n = 2 and R = $-CH_2-CH=CH_2$ and the 3 methyl groups are in the 3,3,5-position.

13. Mixtures of the pre-emergence and post-emergence herbicides according to Claims 3 to 5, or 6 to 8, or 9 and 10, or 11 and 12, the mixtures containing at least 1% by weight of each individual compound.

14. Use of the pre-emergence and post-emergence herbicides according to one or more of Claims 1 to 13 in amounts of 0.5 to 10 kg of the particular active compound or compounds per 10 000 $m^2$ of the crops of useful plants.

15. Use of the pre-emergence and post-emergence herbicides according to one or more of Claims 1 to 13 as a mixture with at least one auxiliary from the group comprising carriers, diluents, wetting agents, dispersing agents and emulsifiers.

**Revendications**

1. Herbicides de pré-émergence et de post-émergence exerçant une meilleure activité biocide contre les mauvaises herbes et les plantes adventices tout en ayant une bonne comptabilité vis-à-vis des plantes utiles, la substance active de ces herbicides étant constituée d'un N-(triméthyl-cyclo-alcényl)-N-alkylacétamide α-substitué de formule:

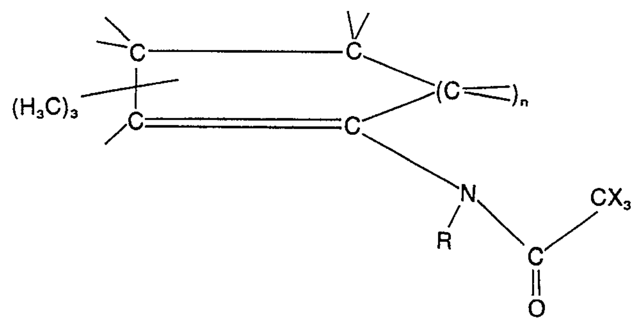

I.

où n = 1 ou 2 avec cette restriction que, dans les cas des dérivés de 1-cyclopentène (n = 1), les trois groupes méthyle ne peuvent occuper que les positions 3,3,5 ou 3,5,5 ou encore 2,4,4 et, dans le cas des dérivés de 1-cyclohexène (n = 2), ils ne peuvent occuper que les positions 3,3,5 ou 3,5,5, les autres valences des atomes de carbone du noyau étant occupées par des atomes d'hydrogène, tandis que

R représente un groupe alkyle ou alcoxy-alkyle à chaîne droite ou ramifiée contenant 1 à 6 atomes de carbone ou un groupe allyle éventuellement substitué par des groupes alkyle en $C_1$–$C_4$, et

X représente des substituants choisis parmi le groupe comprenant un atome d'hydrogène, un groupe méthyle, un atome de chlore et un atome de brome dans n'importe quelle combinaison, mais avec cette restriction que tout au plus deux de ces substituants peuvent être H.

2. Herbicides de pré-émergence et de post-émergence contenant des substances de formule I dans laquelle $-CX_3$ représente chaque fois $-CH_2Cl$.

3. Herbicide de pré-émergence et de post-émergence suivant la revendication 2, caractérisé en ce que n = 1 et R = $-CH_3$, tandis que les trois grupes méthyle occupent les positions 3,5,5.

4. Herbicide de pré-émergence et de post-émergence suivant la revendication 2, caractérisé en ce que n = 1 et R = $-CH_3$, tandis que les trois groupes méthyle occupent les positions 2,4,4.

5. Herbicide de pré-émergence et de post-émergence suivant la revendication 2, caractérisé en ce que n = 1 et R = $-CH_3$, tandis que les trois groupes méthyle occupent les positions 3,3,5.

6. Herbicide de pré-émergence et de post-émergence suivant la revendication 2, caractérisé en ce que n = 1 et R = $-CH_2-CH=CH_2$, tandis que les trois groupes méthyle occupent les positions 3,5,5.

7. Herbicide de pré-émergence et de post-émergence suivant la revendication 2, caractérisé en ce que n = 1 et R = $-CH_2-CH=CH_2$, tandis que les trois groupes méthyle occupent les positions 2,4,4.

8. Herbicide de pré-émergence et de post-émergence suivant la revendication 2, caractérisé en ce que n = 1 et R = $-CH_2-CH=CH_2$, tandis que les trois groupes méthyle occupent les positions 3,3,5.

9. Herbicide de pré-émergence et de post-émergence suivant la revendication 2, caractérisé en ce que n = 2 et R = $-CH_3$, tandis que les trois groupes méthyle occupent les positions 3,5,5.

10. Herbicide de pré-émergence et de post-émergence suivant la revendication 2, caractérisé en ce que n = 2 et R = $-CH_3$, tandis que les trois groupes méthyle occupent les positions 3,3,5.

11. Herbicide de pré-émergence et de post-émergence suivant la revendication 2, caractérisé en ce que n = 2 et R = $-CH_2-CH=CH_2$, tandis que les trois groupes méthyle occupent les positions 3,5,5.

12. Herbicide de pré-émergence et de post-émergence suivant la revendication 2, caractérisé en ce que n = 2 et R = $-CH_2-CH=CH_2$, tandis que les trois groupes méthyle occupent les positions 3,3,5.

13. Mélanges d'herbicides de pré-émergence et de post-émergence suivant les revendications

3 à 5 ou
6 à 8 ou
9 et 10 ou
11 et 12,

chaque composé individuel étant contenu à raison d'au moins 1% en poids dans ces mélanges.

14. Utilisation des herbicides de pré-émergence et de post-émergence suivant une ou plusieurs des revendications 1 à 13 en quantités de 0,5 à 10 kg de la ou de chacune des substances actives par 10 000 m² de cultures de plantes utiles.

15. Utilisation des herbicides de pré-émergence et de post-émergence suivant une ou plusieurs des revendications 1 à 13 en mélange avec au moins un agent auxiliaire choisi parmi le groupe comprenant les substances supports, les diluants, les agents mouillants, les agents dispersants et les émulsionnants.